(19) Europäisches Patentamt / European Patent Office / Office européen des brevets

(11) **EP 2 654 026 A1**

(12) **EUROPEAN PATENT APPLICATION**
published in accordance with Art. 153(4) EPC

(43) Date of publication:
**23.10.2013 Bulletin 2013/43**

(21) Application number: **10860864.7**

(22) Date of filing: **15.12.2010**

(51) Int Cl.:
*G08G 1/16* (2006.01)

(86) International application number:
**PCT/JP2010/072566**

(87) International publication number:
**WO 2012/081096 (21.06.2012 Gazette 2012/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Toyota Jidosha Kabushiki Kaisha
Toyota-shi, Aichi 471-8571 (JP)**

(72) Inventor: **IGARASHI, Shinji
Toyota-shi
Aichi 471-8571 (JP)**

(74) Representative: **TBK
Bavariaring 4-6
80336 München (DE)**

(54) **TRAVEL ASSISTANCE DEVICE, TRAVEL ASSISTANCE METHOD, AND VEHICLE**

(57) An object of the present invention is to provide a technique wherein a traveling lane is set as definitely as possible to perform the warning or the support so that a vehicle is allowed to travel smoothly in the traveling lane. The present invention resides in a driving support apparatus for setting a traveling lane in which a vehicle can travel on the basis of a traveling-prohibited region and performing warning or support so that the vehicle is allowed to travel in the traveling lane if the vehicle is to be departed from the traveling lane; wherein the traveling lane is set while raising a level of reliability as information to recognize the traveling lane from the traveling-prohibited region if the traveling-prohibited region is continuous in a travel direction of the vehicle as compared with if the traveling-prohibited region is discontinuous in the travel direction of the vehicle.

Fig.9

EP 2 654 026 A1

## Description

Technical Field

The present invention relates to a driving support apparatus, a driving support method, and a vehicle.

Background Art

A technique has been disclosed, wherein the position of a subject vehicle can be detected on the basis of the distance from a side wall and the cruise control (driving control) can be maintained even if any discontinuity and/or any blur is/are present on a traveling lane boundary line such as a white line or the like and/or even if the vehicle cannot detect a white line on account of, for example, turning in road or lane change (see, for example, Patent Document 1).

Citation List

Patent Literature

PTL 1: Japanese Patent Application Laid-Open 10-031799;
PTL 2: Japanese Patent Application Laid-Open 2002-225656.

Summary of Invention

Technical Problem

In the case of the technique disclosed in Patent Document 1, the side wall existing just beside the vehicle or the side wall existing ahead of the vehicle by a predetermined distance is recognized, and the cruise control of the vehicle is maintained on the basis of the distance from the concerning side wall. However, when only the side wall existing at the predetermined place or position is recognized, the cruise control, which is based on the distance from the concerning side wall, is suddenly carried out by suddenly recognizing the side wall in some cases. In other cases, the cruise control is carried out at a delayed timing due to any unsatisfactory recognition of the side wall.

The present invention has been made taking the foregoing circumstances into consideration, an object of which is to provide a technique wherein a traveling lane (driving lane or driving track) is set as definitely as possible to perform the warning or the support (help or assistance) so that a vehicle is allowed to travel smoothly in the traveling lane.

Solutions to Problem

The present invention adopts the following construction. That is, the present invention resides in a driving support apparatus for setting a traveling lane in which a vehicle can travel on the basis of a traveling-prohibited region and performing warning or support so that the vehicle is allowed to travel in the traveling lane if the vehicle is to be departed from the traveling lane, wherein:
the traveling lane is set while raising a level of reliability as information to recognize the traveling lane from the traveling-prohibited region if the traveling-prohibited region is continuous in a travel direction of the vehicle as compared with if the traveling-prohibited region is discontinuous in the travel direction of the vehicle.

In this context, the traveling-prohibited region is exemplified by the obstacle including, for example, guard rails, fences, side walls, curbstone, walkers, bicycles, and other vehicles, and the region or area in which any difference in height is present with respect to the traveling flat surface for allowing the vehicle to travel, including, for example, gutters, recesses, and steps. The traveling-prohibited region includes the region in which it is intended not to allow the vehicle to travel and the region in which the traveling of the vehicle is not preferred, in addition to the region in which the vehicle cannot travel.

The phrase "the traveling-prohibited region is continuous in a travel direction of the vehicle" includes such a situation that one traveling-prohibited region, which exists in the travel direction of the vehicle, is continuous and such a situation that a plurality of traveling-prohibited regions, which exist in a dotted manner while providing spacing distances in the travel direction of the vehicle, are continuous. The spacing distance between the traveling-prohibited regions, which is provided when the plurality of traveling-prohibited regions existing in the dotted manner while providing the spacing distances in the travel direction of the vehicle are continuous, is such a spacing distance that the vehicle cannot enter the space between the traveling-prohibited regions which exist in the dotted manner.

The level of reliability is the information to recognize the traveling lane from the traveling-prohibited region detected by the vehicle, wherein the higher the level of reliability is, the more easier the traveling lane can be recognized from the concerning traveling-prohibited region.

In the present invention, if the traveling-prohibited region is continuous in the travel direction of the vehicle, the presence of the traveling-prohibited region is more probable. Therefore, the level of reliability can be raised, and it is possible to recognize the traveling lane from the concerning traveling-prohibited region. In other words, if the traveling-prohibited region is continuous in the travel direction of the vehicle, it is possible to raise the level of recognition as compared with if the traveling-prohibited region is discontinuous in the travel direction of the vehicle. In this context, the level of recognition of the traveling lane is the degree to determine whether or not the warning or the support is performed. If the level of recognition is not less than a predetermined threshold value, the warning or the support is performed, while if the level of recognition is lower than the predetermined threshold value, the warning or the support is not performed. In this way, the level of recognition of the traveling lane is changed depending on whether the traveling-prohibited region is continuous or discontinuous in the travel direction of the vehicle. Therefore, if the traveling-prohibited region is continuous in the travel direction of the vehicle, the traveling lane having the high level of recognition, in which the warning or the support can be performed, can be set up to far positions. Therefore, the traveling lane (driving lane or driving track) can be set as definitely as possible, and the warning or the support can be performed so that the vehicle is allowed to travel smoothly in the traveling lane.

It is preferable that the level of reliability is raised to thereby set the traveling lane up to positions disposed farther from the vehicle if the traveling-prohibited region is continuous in the travel direction of the vehicle as compared with if the traveling-prohibited region is discontinuous in the travel direction of the vehicle.

According to the present invention, if the level of reliability is raised, the traveling lane can be recognized from the traveling-prohibited region located farther from the vehicle. Accordingly, if the traveling-prohibited region is continuous in the travel direction of the vehicle, the level of recognition of the traveling lane is raised up to positions disposed farter from the vehicle, as compared with if the traveling-prohibited region is discontinuous in the travel direction of the vehicle. Therefore, the traveling lane can be set up to positions disposed farther from the vehicle so that the warning or the support is not performed suddenly, and thus the warning or the support can be performed so that the vehicle is allowed to travel smoothly in the traveling lane.

It is preferable that the level of reliability is raised to thereby set the traveling lane while raising a level of recognition of the traveling lane in order to determine whether or not the warning or the support is performed if the traveling-prohibited region is continuous in the travel direction of the vehicle as compared with if the traveling-prohibited region is discontinuous in the travel direction of the vehicle.

According to the present invention, when the level of reliability is raised, the traveling lane is recognized more easily from the traveling-prohibited region. Accordingly, if the traveling-prohibited region is continuous in the travel direction of the vehicle, the level of recognition of the traveling lane is raised for a position disposed at an equal or equivalent distance from the vehicle, as compared with if the traveling-prohibited region is discontinuous in the travel direction of the vehicle. If the level of recognition of the traveling lane is raised, then the possibility to allow the level of recognition to be not less than a predetermined threshold value is raised, and the warning or the support is performed with ease. Therefore, the traveling lane can be set so that the warning or the support is performed with ease, and thus the warning or the support can be performed so that the vehicle is allowed to travel smoothly in the traveling lane.

It is preferable that the traveling lane is set on the basis of not only the traveling-prohibited region but also a road marking which indicates a lane boundary.

According to the present invention, it is possible to warn the driver of the departure from the traveling lane set on the basis of traveling-prohibited region and/or the road marking which indicates the lane boundary (traffic lane boundary), and it is possible to support the operation to avoid the departure from the traveling lane. In this context, the road marking (road indication), which indicates the lane boundary, is exemplified, for example, by the median strip and the partition between lanes including, for example, lines such as white lines, yellow lines, dotted lines and the like, road studs, and light emitting objects on the road surface, and the boundary between the roadway and those other than the roadway including, for example, boundaries between asphalt and gravel.

In another aspect, the present invention resides in a driving support method for setting a traveling lane in which a vehicle can travel on the basis of a traveling-prohibited region and performing warning or support so that the vehicle is allowed to travel in the traveling lane if the vehicle is to be departed from the traveling lane, wherein:

the traveling lane is set while raising a level of reliability as information to recognize the traveling lane from the traveling-prohibited region if the traveling-prohibited region is continuous in a travel direction of the vehicle as compared with if the traveling-prohibited region is discontinuous in the travel direction of the vehicle.

According to the present invention, the traveling lane can be also set as definitely as possible, and the warning or the support can be also performed so that the vehicle is allowed to travel smoothly in the traveling lane.

In still another aspect, the present invention resides in a vehicle which performs warning or support so that the vehicle is allowed to travel in a traveling lane if the vehicle is to be departed from the traveling lane which is set on the basis of a traveling-prohibited region and in which the vehicle can travel, wherein:

a level of reliability as information to recognize the traveling lane from the traveling-prohibited region is raised and the warning or the support is performed easily if the traveling-prohibited region is continuous in a travel direction of the vehicle as compared with if the traveling-prohibited region is discontinuous in the travel direction of the vehicle.

According to the present invention, the warning or the support can be performed so that the vehicle is allowed to travel smoothly in the definitely set traveling lane.

Advantageous Effects of Invention

According to the present invention, the traveling lane can be set as definitely as possible, and it is possible to perform the warning or the support so that the vehicle is allowed to travel smoothly in the traveling lane.

Brief Description of Drawings

Fig. 1 shows a block diagram illustrating the construction of a drive support apparatus according to a first embodiment of the present invention while being classified into distinct functions.

Fig. 2 shows a map to calculate the level of recognition of a traveling lane from the detected edge score according to a first embodiment.

Fig. 3 shows such a situation that a traveling-prohibited region or traveling-prohibited regions is/are continuous in the travel direction of a vehicle according to the first embodiment.

Fig. 4 shows such a situation that a traveling-prohibited region or traveling-prohibited regions, which is/are disposed in a temporary traveling lane according to the first embodiment, has/have continuity, but the traveling-prohibited region or traveling-prohibited regions is/are continuous in a direction having a predetermined angle (inclination) with respect to the travel direction of the vehicle.

Fig. 5 shows such a situation that a traveling-prohibited region or traveling-prohibited regions is/are discontinuous in the travel direction of the vehicle.

Fig. 6 shows the weighting of the level of reliability depending on the distance ahead of the vehicle if the traveling-prohibited region or traveling-prohibited regions is/are discontinuous in the travel direction of the vehicle according to the first embodiment.

Fig. 7 shows a traveling lane to be set if the traveling-prohibited region or traveling-prohibited regions is/are discontinuous in the travel direction of the vehicle according to the first embodiment.

Figs. 8A and 8B show the relationships of the weighting of the level of reliability corresponding to the sensor for detecting the traveling-prohibited region according to the first embodiment.

Fig. 9 shows a flow chart illustrating the integrated recognition process control routine according to the first embodiment.

Description of Embodiments

A specified embodiment of the present invention will be explained below. An explanation will now be made about a drive support apparatus which sets the traveling lane of a vehicle by recognizing the traffic lane and the traveling-prohibited region and which performs the drive support process in order to avoid the departure from the set traveling lane. The drive support process referred to herein is executed earlier than the collision damage mitigating process which is executed when the vehicle is subjected to the emergency stop and when the collision between a vehicle and an obstacle is inevitable. The construction, which is explained in the following embodiment, represents a mode for carrying out the present invention, which does not limit the construction of the present invention.

(First Embodiment)

(Drive support apparatus)

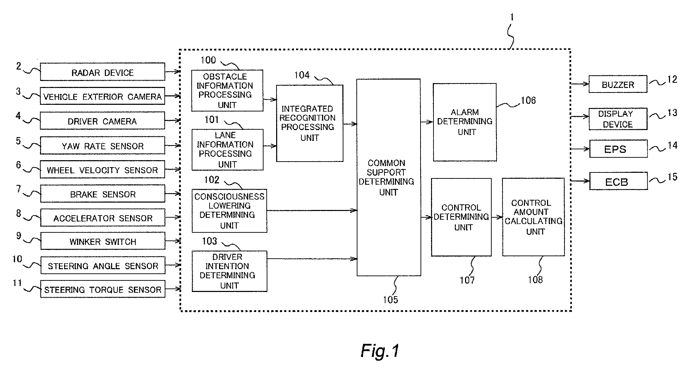

Fig. 1 shows a block diagram illustrating the construction of a drive support apparatus according to a first embodiment of the present invention while being classified into distinct functions. As shown in Fig. 1, an electronic control unit (ECU) 1 for supporting the driving, which constructs the drive support apparatus, is carried on a vehicle.

ECU 1 is the electronic control unit which is provided with, for example, CPU, ROM, RAM, backup RAM, and an I/O interface. Those electrically connected to ECU 1 are various sensors including, for example, a radar device 2, a vehicle exterior camera 3, a driver camera 4, a yaw rate sensor 5, a wheel velocity sensor 6, a brake sensor 7, an accelerator sensor 8, a winker switch 9, a steering angle sensor 10, and a steering torque sensor 11. Output signals of the sensors are inputted into ECU 1.

The radar device 2 is attached to a front portion of the vehicle, wherein a millimeter wave is transmitted forwardly from the vehicle and the reflected wave, which is reflected by an obstacle disposed outside the vehicle, is received. Accordingly, the radar device 2 outputs the information (for example, coordinate information) in relation to the relative position of the obstacle with respect to the vehicle. The vehicle exterior camera 3 is arranged at a position at which those existing in front of the vehicle can be captured in the field of view in the vehicle cabin, and the vehicle exterior camera 3 outputs an image of those existing in front of the vehicle. The driver camera 4 is arranged at a position at which the driver can be captured in the field of view in the vehicle cabin, and the driver camera 4 outputs an image of the driver. The yaw rate sensor 5 is attached to a vehicle body, and the yaw rate sensor 5 outputs an electric signal correlated with the yaw rate of the vehicle. The wheel velocity sensor 6 is attached to a wheel of the vehicle, and the wheel velocity sensor 6 outputs an electric signal correlated with the travel velocity of the vehicle.

The brake sensor 7 is attached to a brake pedal in the vehicle cabin, and the brake sensor 7 outputs an electric signal correlated with the operation torque (pedaling force) of the brake pedal. The accelerator sensor 8 is attached to an accelerator pedal in the vehicle cabin, and the accelerator sensor 8 outputs an electric signal correlated with the operation torque (pedaling force) of the accelerator pedal. The winker switch 9 is attached to a winker lever in the vehicle cabin, and the winker switch 9 outputs an electric signal correlated with the direction indicated by the winker (direction indicator) when the winker lever is operated. The steering angle sensor 10 is attached to a steering rod connected to a steering wheel in the vehicle cabin, and the steering angle sensor 10 outputs an electric signal correlated with the angle of rotation of the steering wheel from the neutral position. The steering torque sensor 11 is attached to the steering rod, and the steering torque sensor 11 outputs an electric signal correlated with the torque (steering torque) inputted into the steering wheel.

Further, various devices and systems including, for example, a buzzer 12, a display device 13, an electric power steering (EPS) 14, and an electronically controlled brake (ECB) system 15 are connected to ECU 1, and the various devices and systems are electrically controlled by ECU 1.

The buzzer 12 is attached in the vehicle cabin, and this device outputs, for example, a warning sound. The display device 13 is attached in the vehicle cabin, and this device displays various messages and warning lamps. The electric power steering (EPS) 14 is a device which supports the operation of the steering wheel by utilizing the torque generated by an electric motor. The electronically controlled brake (ECB) 15 is a device which electrically adjusts the operating hydraulic pressure (braking hydraulic pressure) of a friction brake provided for each of the wheels.

ECU 1 has the following functions in order to control the various devices and systems by utilizing the output signals of the various sensors described above. That is, ECU 1 is provided with an obstacle information processing unit 100, a lane information processing unit 101, a consciousness lowering determining unit 102, a driver intention determining unit 103, an integrated recognition processing unit 104, a common support determining unit 105, an alarm determining unit 106, a control determining unit 107, and a control amount (controlled variable) calculating unit 108.

The obstacle information processing unit 100 approximately determines a regression straight line on which a plurality of traveling-prohibited regions can be avoided or dodged on the basis of the coordinate information of the traveling-prohibited regions such as a plurality of obstacles or the like outputted from the radar device 2, and the obstacle information processing unit 100 generates the information including, for example, the coordinate information of the regression straight line and the yaw angle of the vehicle with respect to the regression straight line. Further, if the traveling-prohibited region such as a single obstacle or the like is detected by the radar device 2, the obstacle information processing unit 100 also generates the coordinate information of the concerning traveling-prohibited region and the information concerning the yaw angle of the vehicle with respect to the traveling-prohibited region. The obstacle information processing unit 100 may generate the information concerning the traveling-prohibited region on the basis of the image photographed or picked up by the vehicle exterior camera 3. The traveling-prohibited region is exemplified by the obstacle including, for example, guard rails, fences, side walls, curbstone, walkers, bicycles, and other vehicles, and the region or area in which any difference in height is present with respect to the traveling flat surface for allowing the vehicle to travel, including, for example, gutters, recesses, and steps. The traveling-prohibited region includes the region in which it is intended not to allow the vehicle to travel and the region in which the traveling of the vehicle is not preferred, in addition to the region in which the vehicle cannot travel.

The lane information processing unit 101 generates the information concerning the lane (traffic lane) and the information concerning the attitude or posture of the vehicle with respect to the lane on the basis of the image picked up by the vehicle exterior camera 3. The information concerning the lane is the information concerning the road marking to indicate the lane boundary and the information concerning the width of the lane prescribed by the concerning road marking. The road marking, which indicates the lane boundary, is exemplified, for example, by the median strip and the partition between lanes including, for example, lines such as white lines, yellow lines, dotted lines and the like, road studs, and light emitting objects on the road surface, and the boundary between the roadway and those other than the roadway including, for example, boundaries between asphalt and gravel. The information concerning the attitude of the vehicle with respect to the lane is the information concerning the distance between the vehicle and the road marking to indicate the lane boundary, the information concerning the offset amount of the vehicle position with respect to central portion of the lane, and the information concerning the yaw angle in the traveling direction of the vehicle with respect to the road marking to indicate the lane boundary. In addition, when the vehicle carries a navigation system, the lane information processing unit 101 may generate the information concerning the lane (traffic lane) from the GPS information and the map information possessed by the navigation system.

The consciousness lowering determining unit 102 determines the degree of lowering of consciousness (degree of awakening) of the driver on the basis of the image photographed or picked up by the driver camera 4. The consciousness lowering determining unit 102 calculates the eye closing time and the eye closing frequency of the driver from the image picked up by the driver camera 4, and it is determined that the consciousness of the driver is lowered or decreased (it is determined that the degree of awakening is low) if the eye closing time or the eye closing frequency exceeds an upper limit value. Alternatively, the consciousness lowering determining unit 102 may calculate the time in which the direction of the face and/or the direction of the line of sight of the driver is/are deviated from the traveling direction of the vehicle, from the image picked up by the driver camera 4 to determine that the driver looks aside if the calculated time exceeds an upper limit value.

The driver intention determining unit 103 determines whether or not the change of the operation amount of the brake pedal, the change of the operation amount of the accelerator pedal, or the change of the operation (steering) amount of the steering wheel is based on the intension of the driver, on the basis of the output signals of the wheel velocity sensor 6, the brake sensor 7, the accelerator sensor 8, the winker switch 9, the steering angle sensor 10, and the steering torque sensor 11.

The integrated recognition processing unit 104 sets the traveling lane (driving lane or driving track) in which the vehicle can travel, on the basis of the information generated by the obstacle information processing unit 100 and the information generated by the lane information processing unit 101 to determine the yaw angle of the vehicle with respect to the traveling lane boundary and the offset amount of the vehicle with respect to the central portion of the traveling lane. In the case of a road on which a lane (traffic lane) has a narrow width, the driver inevitably departs the vehicle from the traffic lane in some cases. In relation thereto, as for the road on which the traffic lane has the narrow width, the integrated recognition processing unit 104 may set the traveling lane while departing from the road marking, on the basis of the information concerning the road marking to indicate the traffic lane boundary and the information concerning the traveling-prohibited region existing around the traffic lane. In other words, the integrated recognition processing unit 104 may set a temporary traveling lane which deviates or departs from the road marking, on the basis of the road marking which indicates the traffic lane boundary, and the integrated recognition processing unit 104 may set a regular traveling lane which deviates or departs from the road marking, on the basis of the temporary traveling lane and the traveling-prohibited region. If the integrated recognition processing unit 104 receives the information concerning a single traveling-prohibited region from the obstacle information processing unit 100, the integrated recognition processing unit 104 may set the traveling lane by elongating the length of the traveling-prohibited region in parallel to the road. That is, the integrated recognition processing unit 104 may set the traveling lane such that the traveling-prohibited region detected as the point on the coordinate is regarded as the line on the coordinate. The amount of elongation (length of the line), which is provided in this procedure, may be made long if the output signal (vehicle velocity) of the wheel velocity sensor 6 is high and/or if the yaw angle of the vehicle with respect to the line is large, as compared with if the vehicle velocity is low and/or if the yaw angle with respect to the line is small.

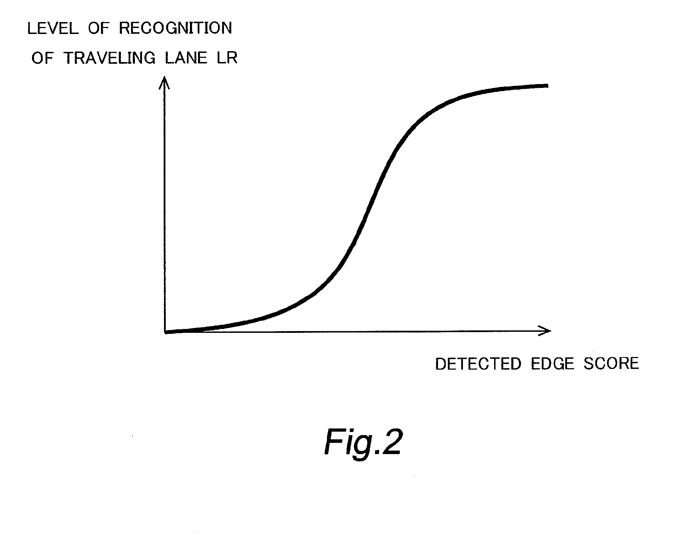

Further, the level of recognition LR is given to the traveling lane set by the integrated recognition processing unit 104. The level of recognition LR of the traveling lane is represented by digitizing the accuracy (certainty) of the traveling lane which is set by combining the accuracy (certainty of presence) of the traveling-prohibited region based on the information generated by the obstacle information processing unit 100 and the accuracy (certainty of presence) of the road marking to indicate the lane boundary based on the information generated by the lane information processing unit 101. It is assumed that the higher the level of recognition LR is, the more satisfactory the situation is. In other words, the level of recognition LR of the traveling lane is the degree to determine whether or not the warning or the support is performed. If the level of recognition LR is not less than a first threshold value (predetermined threshold value), the warning or the support is performed, while if the level of recognition LR is lower than the first threshold value (predetermined threshold value), the warning or the support is not performed. For example, a map, which is shown in Fig. 2, is used for the specified calculating method for calculating the level of recognition LR of the traveling lane as calculated by the integrated recognition processing unit 104. Fig. 2 shows the map to calculate the level of recognition LR of the traveling lane. Each of the accuracy (certainty of presence) of the traveling-prohibited region based on the information generated by the obstacle information processing unit 100 and the accuracy (certainty of presence) of the road marking to indicate the lane boundary based on the information generated by the lane information processing unit 101 is proportional to the detected edge score as provided when each of them is detected. In other words, it is assumed that the larger the detected edge score is, the higher the accuracy of the traveling-prohibited region and the accuracy of the road marking to indicate the lane boundary are. Therefore, the level of recognition LR of the traveling lane can be calculated by applying the map shown in Fig. 2 to the detected edge score concerning the traveling-prohibited region and the road marking to indicate the lane boundary as used when the traveling lane is set. It is also appropriate that the traveling lane itself is not set if the detected edge score is less than a predetermined score. Detailed explanation in relation to the integrated recognition processing unit 104 of this embodiment will be made later on.

The common support determining unit 105 determines whether or not the drive support process is executed on the basis of the information generated by the integrated recognition processing unit 104, the determination result of the consciousness lowering determining unit 102, and the determination result of the driver intention determining unit 103. The common support determining unit 105 may permit the execution of the drive support process if it is determined by the consciousness lowering determining unit 102 that the consciousness of the driver is lowered or the driver looks aside. On the other hand, the common support determining unit 105 may restrict the execution of the drive support process if it is determined by the driver intention determining unit 103 that the driver performs the intentional operation.

Further, if the level of recognition LR of the traveling lane, which is calculated by the integrated recognition processing unit 104, is not less than the preset first threshold value Rth, the common support determining unit 105 unconditionally executes the drive support process. On the other hand, if the level of recognition LR of the traveling lane is lower than the preset first threshold value Rth, the drive support process is not executed. Alternatively, if the level of recognition LR of the traveling lane is lower than the preset first threshold value Rth, it is also allowable that the drive support process can be executed if a certain special condition holds. In this context, the first threshold value Rth is the threshold value which is provided in order to determine whether or not the drive support process is unconditionally executed on the basis of only the level of recognition LR of the traveling lane. If the level of recognition LR of the traveling lane is higher than the first threshold value Rth, the drive support process can be unconditionally executed. Therefore, if the level of recognition LR of the traveling lane is lower than the first threshold value Rth, the execution of the drive support process is ordinarily restricted. However, even in the case of such a condition that the level of recognition LR of the traveling lane is lower than the first threshold value Rth and the execution of the drive support process is restricted, it is also allowable to execute the drive support process, for example, if at least any one of the degree of awakening of the driver and the degree of the driving operation is low.

If the execution of the drive support process is permitted by the common support determining unit 105, the alarm determining unit 106 determines the beeping timing of the buzzer 12 and the display timing of the warning message or the warning lamp to be displayed by the display device 13. The alarm determining unit 106 may perform the beeping of the buzzer 12 and/or display of the warning message or the warning lamp to be displayed by the display device 13, if the distance between the vehicle and the traveling lane boundary in the widthwise direction of the vehicle is not more than a preset distance, if the distance is zero, or if the vehicle travels beyond (exceeds) the traveling lane boundary. The alarm determining unit 106 not only performs the beeping of the buzzer 12 and the display of the warning message or the warning lamp to be displayed by the display device 13 on the basis of the traveling lane boundary but also performs the following operation. That is, the alarm determining unit 106 may enlarge the beeping of the buzzer 12 and/or the alarm determining unit 106 may enlarge the display of the warning message or the warning lamp to be displayed by the display device 13, in relation to such a direction that the departure from the traveling lane is caused, while grasping the traveling lane boundary more broadly in view of the potential. The alarm determining unit 106 may perform the beeping of the buzzer 12 and/or the display of the warning message or the warning lamp to be displayed by the display device 13, if the time, which is required until the vehicle arrives at the traveling lane boundary in the widthwise direction of the vehicle, is not more than a preset time. When the vehicle enters a curve or when the vehicle travels along a curve, then the alarm determining unit 106 may perform the beeping of the buzzer 12 and/or the display of the warning message or the warning lamp to be displayed by the display device 13, if the distance between the vehicle and the traveling lane boundary in the traveling direction of the vehicle is not more than a preset distance, if the distance is zero, or if the vehicle travels beyond the traveling lane boundary. When the vehicle enters a curve or when the vehicle travels along a curve, then the alarm determining unit 106 may perform the beeping of the buzzer 12 and/or the display of the warning message or the warning lamp to be displayed by the display device 13, if the time, which is required until the vehicle arrives at the traveling lane boundary in the traveling direction of the vehicle, is not more than a preset time. The timing, at which the alarm determining unit 106 performs the beeping of the buzzer 12 and/or the display of the warning message or the warning lamp to be displayed by the display device 13, corresponds to the timing (instant or moment) of the departure of the vehicle from the traveling lane.

In this procedure, the preset distance and the preset time, which are used by the alarm determining unit 106 to perform the beeping of the buzzer 12 and/or the display of the warning message or the warning lamp to be displayed by the display device 13, are the values which are changed depending on the output signal of the wheel velocity sensor 6 (vehicle velocity) and the output signal of the yaw rate sensor 5 (yaw rate). When the vehicle velocity is high, then the preset distance is set to be long or the preset time is set to be long, as compared with when the vehicle velocity is low. When the yaw rate is large, then the preset distance is set to be long or the preset time is set to be long, as compared with when the yaw rate is small.

The method for warning the driver is not limited to the beeping of the buzzer 12 and the display of the warning message or the warning lamp to be displayed on the display device 13. It is also allowable to adopt, for example, a method in which the tightening torque of a seat belt is changed intermittently.

If the execution of the drive support process is permitted by the common support determining unit 105, the control determining unit 107 determines whether or not the electric power steering (EPS) 14 and/or the electronically controlled brake (ECB) 15 is/are operated in order to avoid the departure from the traveling lane. The control determining unit 107 may operate the electric power steering (EPS) 14 and/or the electronically controlled brake (ECB) 15 if the distance between the vehicle and the traveling lane boundary in the widthwise direction of the vehicle is not more than a preset distance, if the distance is zero, or if the vehicle travels beyond the traveling lane boundary. The control determining unit 107 may operate the electric power steering (EPS) 14 and/or the electronically controlled brake (ECB) 15, if the time, which is required until the vehicle arrives at the traveling lane boundary in the widthwise direction of the vehicle, is not more than a preset time. When the vehicle enters a curve or when the vehicle travels along a curve, then the control determining unit 107 may operate the electric power steering (EPS) 14 and/or the electronically controlled brake (ECB) 15, if the distance between the vehicle and the traveling lane boundary in the traveling direction of the vehicle is not more than a preset distance, if the distance is zero, or if the vehicle travels beyond the traveling lane boundary. When the vehicle enters a curve or when the vehicle travels along a curve, then the control determining unit 107 may operate the electric power steering (EPS) 14 and/or the electronically controlled brake (ECB) 15, if the time, which is required until the vehicle arrives at the traveling lane boundary in the traveling direction of the vehicle, is not more than a preset time. The timing, at which the control determining unit 107 operates the electric power steering (EPS) 14 and/or the electronically controlled brake (ECB) 15, corresponds to the timing (instant or moment) of the departure of the vehicle from the traveling lane.

The preset distance and the preset time, which are used by the control determining unit 107, are changed depending on the vehicle velocity and the yaw rate in the same manner as the preset distance and the preset time used by the alarm determining unit 106. However, the preset distance and the preset time, which are used by the control determining unit 107, may be set to be shorter than the preset distance and the preset time which are used by the alarm determining unit 106.

If the operation request for operating the electric power steering (EPS) 14 and/or the electronically controlled brake (ECB) 14 is generated by the control determining unit 107, then the control amount calculating unit 108 calculates the control amounts of the electric power steering (EPS) 14 and the electronically controlled brake (ECB) 15, and the control amount calculating unit 108 operates the electric power steering (EPS) 14 and the electronically controlled brake (ECB) 15 in accordance with the calculated control amounts. The control amount calculating unit 108 calculates the target yaw rate required to avoid the departure form the traveling lane by using, as the parameters, the information generated by the integrated recognition processing unit 104, the output signal of the wheel velocity sensor 6 (vehicle velocity), and the output signal of the yaw rate sensor 5 (yaw rate). In particular, the control amount calculating unit 108 calculates the target yaw rate Ytrg in accordance with the following expression assuming that D represents the relative distance from the traveling lane boundary, V represents the velocity of the vehicle (vehicle velocity), and θ represents the yaw angle of the vehicle with respect to the traveling lane boundary.

$$Ytrg = (θ•Vsinθ)/D$$

The control amount calculating unit 108 determines the control amount (steering torque) of the electric power steering (EPS) 14 and the control amount (braking hydraulic pressure) of the electronically controlled brake (ECB) 15 by using the target yaw rate Ytrg as the parameter (argument). In this procedure, the relationship between the target yaw rate Ytrg and the steering torque and the relationship between the target yaw rate Ytrg and the braking hydraulic pressure may be previously mapped. If the target yaw rate Ytrg is smaller than a preset value (maximum value of the yaw rate at which the avoidance of the departure from the traveling lane can be achieved by only the steering), the braking hydraulic pressure of the electronically controlled brake (ECB) 15 may be set to zero. When the electronically controlled brake (ECB) 15 is operated, if different braking hydraulic pressures are applied to the friction brakes for the left and right wheels of the vehicle, then a yaw rate, which interferes with the yaw rate generated by the electric power steering (EPS) 14, is generated. Therefore, it is desirable that equivalent braking hydraulic pressures are applied to the friction brakes for the left and right wheels. The control amount calculating unit 108 not only operates the electric power steering (EPS) 14 and the electronically controlled brake (ECB) 15 on the basis of the traveling lane boundary but also performs the following operation. That is, the control amount calculating unit 108 may increase the control amounts in relation to such a direction that the departure from the traveling lane is caused, while grasping the traveling lane boundary more broadly in view of the potential.

The method for decelerating the vehicle is not limited to the method in which the friction brake is operated by means of the electronically controlled brake (ECB) 15. It is also allowable to use a method in which the kinetic energy of the vehicle is converted (regenerated) into the electric energy and a method in which the transmission gear ratio of a transmission is changed to increase the engine brake.

According to the drive support apparatus described above, it is possible to warn the driver of the departure from the traveling lane which is set on the basis of the traffic lane and the traveling-prohibited region such as the obstacle or the like, and it is possible to support the operation in order to avoid the departure from the traveling lane.

(Integrated recognition process control)

The integrated recognition processing unit 104 sets the traveling lane in which the vehicle can travel on the basis of the information generated by the obstacle information processing unit 100 and the information generated by the lane information processing unit 101. Conventionally, it has been conceived that the side wall existing just aside the vehicle and/or the side wall existing ahead of the vehicle by a predetermined distance is/are recognized, and the cruise control of the vehicle is maintained on the basis of the distance from the concerning side wall or side walls. However, if only the side wall, which is disposed at the predetermined place or position, is recognized, then the cruise control, which is based on the distance from the side wall, is suddenly carried out in some cases as a result of the sudden recognition of the side wall, or the cruise control is carried out while being delayed in other cases as a result of any unsatisfactory recognition of the side wall. In order to avoid such situations, the driving support apparatus uses the information generated by the obstacle information processing unit 100, and the traveling lane is set while incorporating the traveling-prohibited region which has a certain degree of distance from the vehicle. Also in this case, it has been conceived that it is unnecessary to consider even the traveling-prohibited region disposed at a far position, because the detected edge score is more decreased at farther positions as well. However, for example, when the traveling-prohibited region such as guard rails, fences or the like, which is continuous in the travel direction of the vehicle, is present, the presence of the continuous traveling-prohibited region can be more probable. Therefore, the traveling-prohibited region can be incorporated into the setting object for setting the traveling lane while raising the level of reliability. In this case, the traveling lane can be set as definitely as possible up to farther positions while raising the level of recognition to a greater extent. When the traveling lane is set as described above, the driving support apparatus can control the vehicle while having a time to spare. Further, it is possible to decrease such an opportunity that the driving support cannot be performed due to a low level of recognition of the traveling lane. It is possible to perform the driving support with ease.

In view of the above, in this embodiment, the traveling lane is set while raising the level of reliability as the information to recognize the traveling lane from the traveling-prohibited region if the traveling-prohibited region is continuous in the travel direction of the vehicle as compared with if the traveling-prohibited region is discontinuous in the travel direction of the vehicle. Accordingly, the level of reliability is raised if the traveling-prohibited region is continuous in the travel direction of the vehicle as compared with if the traveling-prohibited region is discontinuous in the travel direction of the vehicle. Thus, the traveling lane can be set up to positions farther from the vehicle, and the setting can be performed while raising the level of recognition LR to determine whether or not the driving support is performed.

The phrase "the traveling-prohibited region is continuous in the travel direction of the vehicle" includes such a situation that one traveling-prohibited region, which exists in the travel direction of the vehicle, is continuous and such a situation that a plurality of traveling-prohibited regions, which exist in a dotted manner while providing spacing distances in the travel direction of the vehicle, are continuous. The spacing distance between the traveling-prohibited regions, which is provided when the plurality of traveling-prohibited regions existing in the dotted manner while providing the spacing distances in the travel direction of the vehicle are continuous, is such a spacing distance that the vehicle cannot enter the space between the traveling-prohibited regions which exist in the dotted manner.

The level of reliability is the information to recognize the traveling lane from the traveling-prohibited region detected by the vehicle, wherein the higher the level of reliability is, the more easier the traveling lane can be recognized from the concerning traveling-prohibited region. In other words, the level of reliability resides in the numerical value which is to be dealt with in the same manner as the detected edge score of the traveling-prohibited region. In this embodiment, the level of reliability is used by being converted into the detected edge score. In this procedure, the level of reliability is converted into the detected edge score in accordance with a relationship resembling the direct proportion.

In this embodiment, if the traveling-prohibited region is continuous in the travel direction of the vehicle, the presence of the traveling-prohibited region is more probable. Therefore, the level of reliability can be raised, and it is possible to recognize the traveling lane from the concerning traveling-prohibited region. When the level of reliability is raised, then the traveling lane can be recognized from the traveling-prohibited region disposed farther from the vehicle, and the traveling lane can be easily recognized from the traveling-prohibited region. Accordingly, if the traveling-prohibited region is continuous in the travel direction of the vehicle, it is possible to raise the level of recognition LR of the traveling lane, as compared with if the traveling-prohibited region is discontinuous in the travel direction of the vehicle. In other words, the traveling-prohibited region, for which the level of reliability is raised, is dealt with as the traveling-prohibited region having the high detected edge score, wherein it is possible to raise the level of recognition LR of the traveling lane. Therefore, the level of recognition LR of the traveling lane is raised up to farther positions from the vehicle, and the level of recognition LR of the traveling lane is raised at an equal or equivalent distance from the vehicle. In this way, the level of recognition LR of the traveling lane is changed depending on whether the traveling-prohibited region is continuous or discontinuous in the travel direction of the vehicle. Therefore, if the traveling-prohibited region is continuous in the travel direction of the vehicle, the traveling lane having the high level of recognition LR, in which the driving support can be performed, can be set up to far positions. Therefore, the traveling lane can be set up to farther positions from the vehicle so that the driving support is not performed suddenly. Further, it is possible to set the traveling lane having the high level of recognition LR so that the control of the driving support is allowed to intervene with ease. Therefore, it is possible to perform the driving support so that the vehicle is allowed to travel smoothly in the traveling lane which is set as distinctly as possible as described above.

An explanation will be made in detail below about the function of the integrated recognition processing unit 104 according to this embodiment. The integrated recognition processing unit 104 sets the traveling lane in which the vehicle can travel on the basis of the information generated by the obstacle information processing unit 100 and the information generated by the lane information processing unit 101.

When the traveling lane is set, a temporary traveling lane is firstly set in accordance with the information generated by the lane information processing unit 101. In this context, the temporary traveling lane is the traveling lane which is set temporarily along the traffic lane on the basis of only the information generated by the lane information processing unit 101, as the assumption or premise to set the regular traveling lane in which the vehicle can travel. For example, the temporary traveling lane is set on the road marking which indicates the lane boundary (traffic lane boundary). If it is determined that the width of the traffic lane is narrow, the temporary traveling lane is set while deviating or departing from the traffic lane (road marking) in some cases. The higher level of recognition LR is given to the temporary traveling lane when the detected edge score is larger, on the basis of the detected edge score of, for example, the road marking to indicate the lane boundary, as included in the information generated by the lane information processing unit 101.

When the temporary traveling lane is set, it is determined whether or not the traveling-prohibited region or traveling-prohibited regions such as the obstacle or obstacles or the like exist/exists in the temporary traveling lane, from the information generated by the obstacle information processing unit 100. It is possible to determine that the traveling-prohibited region exists in the temporary traveling lane by comparing the coordinate information of the traveling-prohibited region with the coordinate information of the temporary traveling lane having been set.

If it is determined that the traveling-prohibited region does not exist in the temporary traveling lane, the temporary traveling lane is set as the regular traveling lane as it is. In this procedure, the level of recognition LR of the regular traveling lane inherits the level of recognition LR of the temporary traveling lane as it is.

If it is determined that the traveling-prohibited region exists in the temporary traveling lane, it is determined whether or not the traveling-prohibited region, which exists in the temporary traveling lane, has continuity. The phrase "the traveling-prohibited region, which exists in the temporary traveling lane, has continuity" means that the traveling-prohibited region, which exists in the temporary traveling lane, is continuous in the travel direction of the vehicle or in a direction having a predetermined angle with respect to the travel direction.

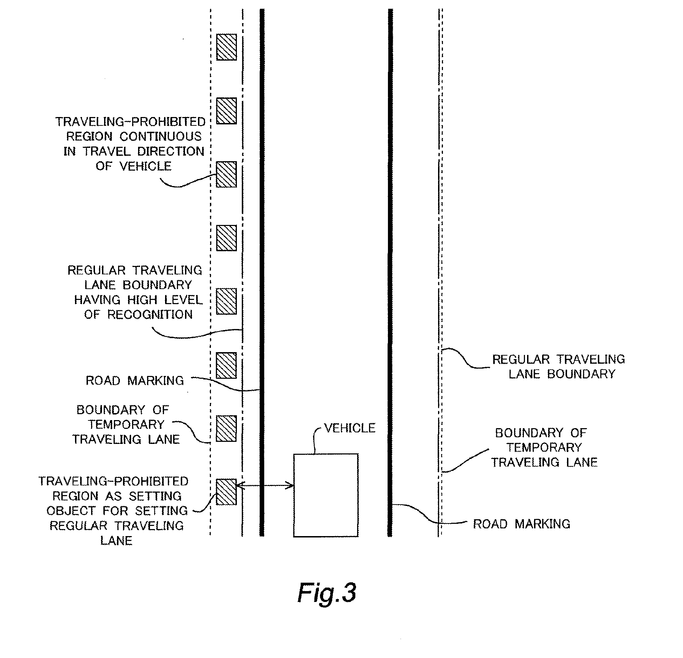

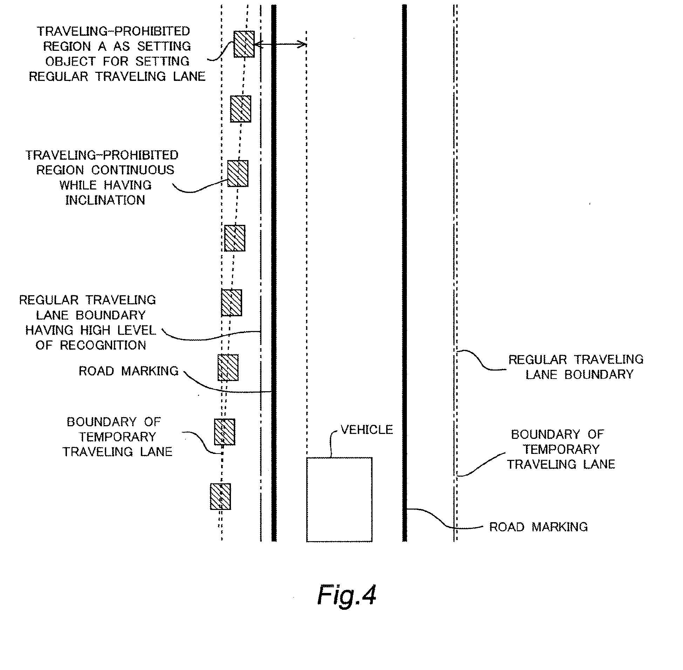

If it is determined that the traveling-prohibited region or traveling-prohibited regions, which exist/exists in the temporary traveling lane, has/have continuity, the regular traveling lane is set in conformity with the traveling-prohibited region having the closest or nearest lateral position from the vehicle, irrelevant to the distance ahead of the vehicle. Fig. 3 shows such a situation that the traveling-prohibited region or traveling-prohibited regions is/are continuous in the travel direction of the vehicle. When the traveling-prohibited region is continuous in the travel direction of the vehicle in the temporary traveling lane as shown in Fig. 3, there is such a high possibility that the traveling-prohibited region may be, for example, a guard rail or a fence. For example, the guard rail and the fence are constructed in straight forms in almost all cases except that the road is curved. According to this fact, it is probable that almost all of the traveling-prohibited regions having continuity, which are detected, correctly capture the positions of the respective traveling-prohibited regions. Therefore, on the basis of the information that the traveling-prohibited region has continuity, the levels of reliability of the position information of the respective detection points of the traveling-prohibited region are uniformly raised, and the traveling lane is recognized from the concerning traveling-prohibited region. Therefore, if the traveling-prohibited region existing in the temporary traveling lane has continuity, the regular traveling lane is set by narrowing the temporary traveling lane so that the traveling-prohibited region is avoided while being conformed or suited to the traveling-prohibited region having the closest lateral position from the vehicle irrelevant to the distance ahead of the vehicle. In this procedure, the regular traveling lane is set to arrive at the traveling-prohibited region having the farthest distance, of the detected traveling-prohibited regions having continuity. Fig. 4 shows such a situation that the traveling-prohibited region or traveling-prohibited regions, which is/are disposed in the temporary traveling lane, has/have continuity, but the traveling-prohibited region or traveling-prohibited regions is/are continuous in a direction having a predetermined angle (inclination) with respect to the travel direction of the vehicle. As shown in Fig. 4, also in this case, the regular traveling lane is set by narrowing the temporary traveling lane so that the traveling-prohibited region is avoided in conformity with the traveling-prohibited region A having the closest lateral position from the vehicle and having a considerable distance ahead of the vehicle. In the regular traveling lane set as described above, the levels of reliability of the position information of the respective detection points of the traveling-prohibited region are uniformly raised. Therefore, the detected traveling-prohibited region having continuity is uniformly dealt with as having the high detected edge score, and the level of recognition LR of the regular traveling lane is uniformly raised.

In this embodiment, the levels of reliability are uniformly raised for all of the detected traveling-prohibited regions having continuity, and the regular traveling lane is set in conformity with the traveling-prohibited region having the closest or nearest lateral position from the vehicle irrelevant to the distance ahead of the vehicle. However, the present invention is not limited thereto. For example, the regular traveling lane may be set such that the levels of reliability are raised for those disposed nearer to the vehicle, in relation to the detected traveling-prohibited regions having continuity.

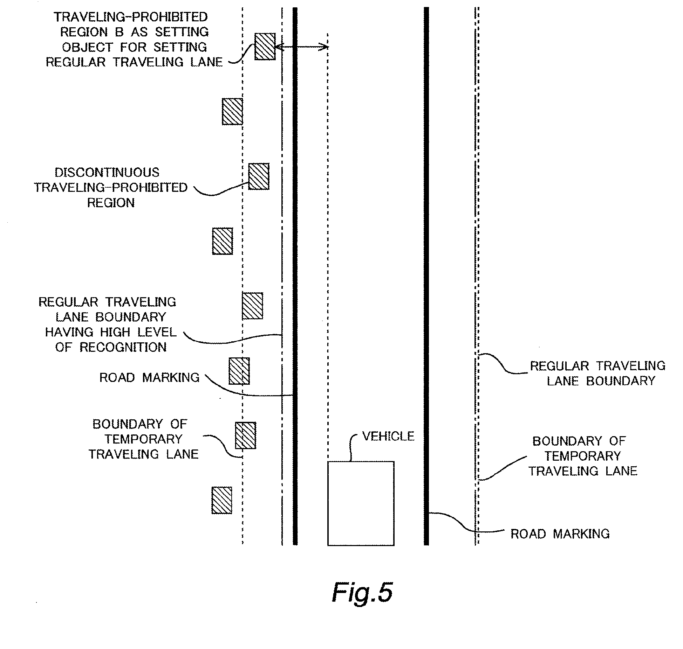

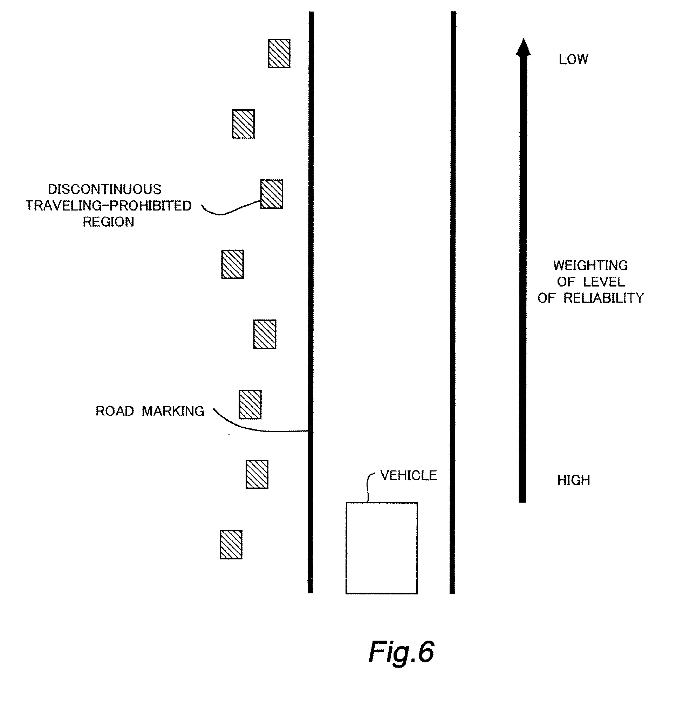

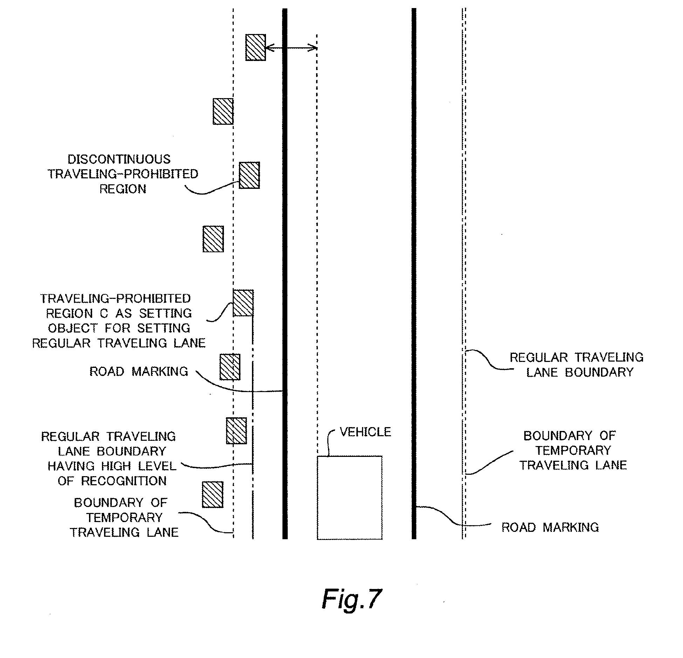

On the other hand, if it is determined that the traveling-prohibited region or traveling-prohibited regions in the temperature traveling lane has/have no continuity, the weighting of the level of reliability, in which the level of reliability is raised at positions nearer to the vehicle, is performed depending on the distance ahead of the vehicle with respect to the respective detection points of the traveling-prohibited regions. Further, the regular traveling lane is set in accordance with the positional relationship between the vehicle and the traveling-prohibited region for which the level of reliability is subjected to the weighting. In other words, the regular traveling lane is set until arrival at the traveling-prohibited region at which the converted detected edge score is not less than a preset predetermined score when the weighted level of reliability is converted into the detected edge score. Fig. 5 shows such a situation that the traveling-prohibited region or traveling-prohibited regions is/are discontinuous in the travel direction of the vehicle. When the traveling-prohibited region is discontinuous in the travel direction of the vehicle in the temporary traveling lane as shown in Fig. 5, there is such a possibility that the traveling-prohibited region may correspond to a plurality of various obstacles including, for example, walkers, bicycles, poles (electric poles or telegraph poles), traffic signs, and houses on the road side. In relation to the situation as described above, as shown in Fig. 5, if all of the detected traveling-prohibited regions are allowed to have any uniform level of reliability, and all of the detected traveling-prohibited regions are incorporated as the setting objects for setting the traveling lane, then a narrow traveling lane is set in some cases by using the traveling-prohibited region B disposed far from the vehicle as the setting object, although the space, in which the vehicle can travel, exists in the vicinity of the vehicle at the position disposed ahead of the vehicle. In this case, the driving support is performed when the vehicle merely moves to the space in which the vehicle can travel in the vicinity of the vehicle at the position disposed ahead of the vehicle, which is not suited to the sense of the driver. As for the sensor for detecting the traveling-prohibited region, the farther the distance is, the more deteriorated the detection accuracy is. Therefore, a problem also arises if any uniform level of reliability is used. In view of the above, in this embodiment, as shown in Fig. 6, the weighting of the level of reliability is applied beforehand so that the level of reliability is raised at positions nearer to the vehicle, depending on the distance ahead of the vehicle. Fig. 6 shows the weighting of the level of reliability depending on the distance ahead of the vehicle if the traveling-prohibited region or traveling-prohibited regions is/are discontinuous in the travel direction of the vehicle. Fig. 7 shows a traveling lane to be set if the traveling-prohibited region or traveling-prohibited regions is/are discontinuous in the travel direction of the vehicle. When the weighting of the level of reliability as shown in Fig. 6 is applied to a plurality of detected traveling-prohibited regions, if the level of reliability subjected to the weighting is converted into the detected edge score, then it is possible to specify the traveling-prohibited region in which the converted detected edge score is not less than a preset predetermined score. When the regular traveling lane is set by narrowing the temporary traveling lane so that the traveling-prohibited region or traveling-prohibited regions is/are avoided up to the traveling-prohibited region (traveling-prohibited region C shown in Fig. 7) in which the detected edge score is not less than the predetermined score. In Fig. 7, the regular traveling lane, which has the side disposed at the left of the vehicle with the discontinuous traveling-prohibited regions existing thereon, is set with the distance until arrival at the traveling-prohibited region C. Accordingly, the regular traveling lane can be set while being widened in the vicinity of the vehicle, and it is possible to perform the driving support suited to the sense of the driver. Further, it is possible to perform the driving support while considering the detection errors of various sensors by utilizing, for the weighting of the level of reliability, the fact that the detection accuracies of various sensors are higher in the vicinity of the vehicle.

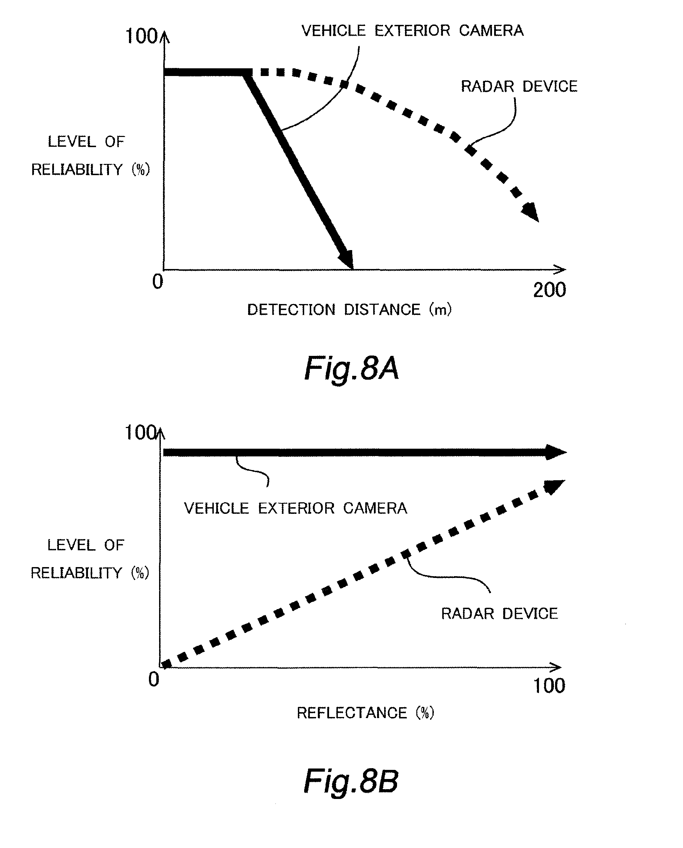

If it is determined that the traveling-prohibited region in the temporary traveling lane has no continuity, the weighting of the level of reliability as shown in Fig. 6 is applied while considering the characteristics of respective various sensors including, for example, the vehicle exterior camera 3 and the radar device 2 for detecting the traveling-prohibited region. That is, when the sensor for detecting the traveling-prohibited region is the vehicle exterior camera 3, the traveling-prohibited region such as the obstacle or the like can be recognized as the thing existing there, by being seen in a stereoscopic view irrelevant to the material quality of whether the traveling-prohibited region such as the obstacle or the like is made of, for example, metal or resin. However, in the case of the vehicle exterior camera 3, the detection distance is short. On the other hand, when the sensor for detecting the traveling-prohibited region is the radar device 2, the traveling-prohibited region such as the obstacle or the like disposed at a long distance can be also recognized accurately. However, in the case of the radar device 2, it is difficult to recognize, for example, trees and poles having low reflectances as well as concrete protective walls having no irregularities. Taking the foregoing fact into consideration, the weighting of the level of reliability is applied as shown in Fig. 8. Fig. 8 shows the relationship of the weighting of the level of reliability corresponding to the sensor for detecting the traveling-prohibited region. As shown in Fig. 8, in the case of the vehicle exterior camera 3, the detection distance is short, and the level of reliability is suddenly lowered if the distance exceeds 40 m. However, the level of reliability can be maintained to be high in relation to the reflectance of the detected object. In the case of the radar device 2, the detection distance is long, and the detection can be performed while gently lowering the level of reliability up to 200 m. However, the reflectance of the detected object is in a relationship of direct proportion with respect to the level of reliability.

In this procedure, the high level of reliability, which is provided at the position closest or nearest to the vehicle in the weighting of the level of reliability as shown in Fig. 6 if it is determined that the traveling-prohibited region in the temporary traveling lane has no continuity, is approximately equal to the level of reliability which is uniformly raised if it is determined that the traveling-prohibited region in the temporary traveling lane has continuity. Accordingly, if the traveling-prohibited region is continuous in the travel direction of the vehicle, the level of reliability, which is provided or dealt with as the information to recognize the traveling lane from the traveling-prohibited region, is raised, as compared with if the traveling-prohibited region is discontinuous in the travel direction of the vehicle. The weighting of the level of reliability as shown in Fig. 6, which is applied if it is determined that the traveling-prohibited region in the temporary traveling lane has no continuity, may be also applied while further raising the degree of the level of reliability if it is determined that the traveling-prohibited region in the temporary traveling lane has continuity.

When the regular traveling lane is set as described above, if the traveling-prohibited region is continuous in the travel direction of the vehicle, then the traveling lane having the high level of recognition LR, in which the driving support can be performed, can be set up to far positions. Thus, the traveling lane can be set up to farther positions from the vehicle so that the driving support is not performed suddenly, and the traveling lane can be set so that the control of the driving support is allowed to intervene with ease. Therefore, it is possible to perform the driving support so that the vehicle is allowed to travel smoothly in the traveling lane which is set as definitely as possible.

(Integrated recognition process control routine)

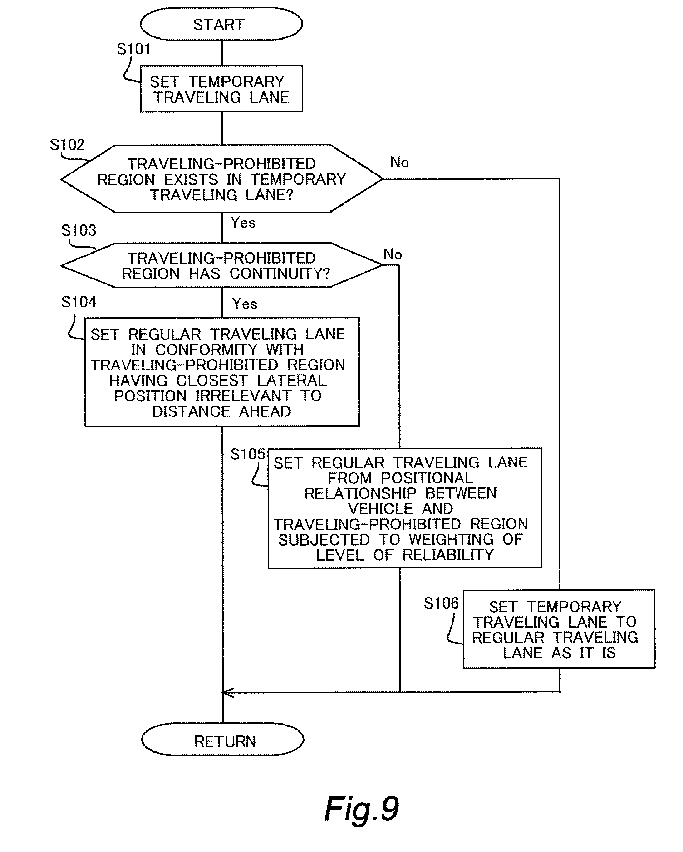

An explanation will be made on the basis of a flow chart shown in Fig. 9 about the integrated recognition process control routine executed by the integrated recognition processing unit 104. Fig. 9 shows the flow chart illustrating the integrated recognition process control routine. This routine is repeatedly executed by the integrated recognition processing unit 104 of ECU 1 every time when a predetermined period of time elapses.

When the routine shown in Fig. 9 is started, the temporary traveling lane is set from the information generated by the lane information processing unit 101 in S101. In S102, it is determined whether or not the traveling-prohibited region such as the obstacle or the like exists in the temporary traveling lane, from the information generated by the obstacle information processing unit 100. If it is affirmatively determined in S102 that the traveling-prohibited region exists in the temporary traveling lane, the routine proceeds to S103. If it is negatively determined in S102 that the traveling-prohibited region does not exist in the temporary traveling lane, the routine proceeds to S106. In S103, it is determined whether or not the traveling-prohibited region in the temporary traveling lane has continuity. If it is affirmatively determined in S103 that the traveling-prohibited region has continuity, the routine proceeds to S104. If it is negatively determined in S103 that the traveling-prohibited region has no continuity, the routine proceeds to S105.

In S104, the regular traveling lane is set in conformity with the traveling-prohibited region having the closest lateral position from the vehicle irrelevant to the distance ahead of the vehicle. The regular traveling lane, which is set on the basis of the traveling-prohibited region having continuity in S104, has the level of recognition LR which is uniformly high because the level of reliability of the traveling-prohibited region, which is uniformly raised, is converted into the detected edge score. In S105, the weighting of the level of reliability is performed such that the level of reliability is more raised at positions nearer to the vehicle depending on the distance ahead of the vehicle with respect to each of the detection points of the traveling-prohibited regions. The regular traveling lane is set from the positional relationship between the vehicle and the traveling-prohibited region in which the level of reliability is subjected to the weighting. The regular traveling lane, which is set on the basis of the traveling-prohibited region having no continuity in S105, has the level of recognition LR which is progressively lowered as the distance ahead of the vehicle is longer, from the level of reliability which is provided at the closest or nearest distance from the vehicle and which is approximately equal to the level of recognition LR of the regular traveling lane. In S106, the temporary traveling lane is set as the regular traveling lane as it is. The level of recognition LR of the regular traveling lane set in S106 is maintained as the level of reliability LR of the temporary traveling lane based on the detected edge score of the road marking or the like to indicate the lane boundary, included in the information generated by the lane information processing unit 101. This routine is once completed after the processes of the steps of S104, S105, and S106. The driver is warned of the departure from the regular traveling lane set on the basis of the traffic lane and the traveling-prohibited region such as the obstacle or the like, and/or the operation is supported in order to avoid the departure from the traveling lane in accordance with the control to be performed in and after the integrated recognition process control.

According to this routine as described above, the regular traveling lane can be set as definitely as possible for farther positions while further raising the level of recognition. Accordingly, the driving support apparatus uses the regular traveling lane which is set for farther positions. Therefore, it is possible to control the vehicle while having a time to spare, and it is possible to perform the driving support with ease. Further, the driving support apparatus uses the regular traveling lane in which the level of recognition LR is set to be higher. Therefore, any opportunity, in which the driving support cannot be performed due to any low level of recognition LR, is decreased, and it is possible to perform the driving support with ease.

(Other things)

The driving support apparatus according to the present invention is not limited to the embodiment described above. It is also allowable to apply various changes within a scope or range without deviating from the gist or essential characteristics of the present invention. For example, the foregoing embodiment resides in the driving support apparatus which sets the traveling lane while considering the information based on the lane information processing unit 100 as well. However, the driving support apparatus of the present invention may set the traveling lane with the information based on only the traveling-prohibited region detected, for example, by the obstacle information processing unit 100 without considering the information based on the lane information processing unit 101. Further, the embodiment described above is also embodiments of the driving support method and the vehicle which carries the driving support apparatus according to the present invention.

Reference Signs List

1: ECU, 2: radar device, 3: vehicle exterior camera, 4: driver camera, 5: yaw rate sensor, 6: wheel velocity sensor, 7: brake sensor, 8: accelerator sensor, 9: winker switch, 10: steering angle sensor, 11: steering torque sensor, 12: buzzer, 13: display device, 14: EPS, 15: ECB, 100: obstacle information processing unit, 101: lane information processing unit, 102: consciousness lowering determining unit, 103: driver intention determining unit, 104: integrated recognition processing unit, 105: common support determining unit, 106: alarm determining unit, 107: control determining unit, 108: control amount calculating unit.

## Claims

1.  A driving support apparatus for setting a traveling lane in which a vehicle can travel on the basis of a traveling-prohibited region and performing warning or support so that the vehicle is allowed to travel in the traveling lane if the vehicle is to be departed from the traveling lane, wherein:

    the traveling lane is set while raising a level of reliability as information to recognize the traveling lane from the traveling-prohibited region if the traveling-prohibited region is continuous in a travel direction of the vehicle as compared with if the traveling-prohibited region is discontinuous in the travel direction of the vehicle.

2.  The driving support apparatus according to claim 1, wherein the level of reliability is raised to thereby set the traveling lane up to positions disposed farther from the vehicle if the traveling-prohibited region is continuous in the travel direction of the vehicle as compared with if the traveling-prohibited region is discontinuous in the travel direction of the vehicle.

3.  The driving support apparatus according to claim 1 or 2, wherein the level of reliability is raised to thereby set the traveling lane while raising a level of recognition of the traveling lane in order to determine whether or not  the warning or the support is performed if the traveling-prohibited region is continuous in the travel direction of the vehicle as compared with if the traveling-prohibited region is discontinuous in the travel direction of the vehicle.

4.  The driving support apparatus according to any one of claims 1 to 3, wherein the traveling lane is set on the basis of not only the traveling-prohibited region but also a road marking which indicates a lane boundary.

5.  A driving support method for setting a traveling lane in which a vehicle can travel on the basis of a traveling-prohibited region and performing warning or support so that the vehicle is allowed to travel in the traveling lane if the vehicle is to be departed from the traveling lane, wherein:

    the traveling lane is set while raising a level of reliability as information to recognize the traveling lane from the traveling-prohibited region if the traveling-prohibited region is continuous in a travel direction of the vehicle as compared with if the traveling-prohibited region is discontinuous in the travel direction of the vehicle.

6.  A vehicle which performs warning or support so that the vehicle is allowed to travel in a traveling lane if the vehicle is to be departed from the traveling lane which is  set on the basis of a traveling-prohibited region and in which the vehicle can travel, wherein:

    a level of reliability as information to recognize the traveling lane from the traveling-prohibited region is raised and the warning or the support is performed easily if the traveling-prohibited region is continuous in a travel direction of the vehicle as compared with if the traveling-prohibited region is discontinuous in the travel direction of the vehicle.

Fig.1

LEVEL OF RECOGNITION
OF TRAVELING LANE LR

DETECTED EDGE SCORE

*Fig.2*

TRAVELING-PROHIBITED
REGION CONTINUOUS
IN TRAVEL DIRECTION
OF VEHICLE

REGULAR TRAVELING
LANE BOUNDARY
HAVING HIGH LEVEL
OF RECOGNITION

ROAD MARKING

BOUNDARY OF
TEMPORARY
TRAVELING LANE

TRAVELING-PROHIBITED
REGION AS SETTING
OBJECT FOR SETTING
REGULAR TRAVELING
LANE

VEHICLE

REGULAR TRAVELING
LANE BOUNDARY

BOUNDARY OF
TEMPORARY
TRAVELING LANE

ROAD MARKING

*Fig.3*

TRAVELING-PROHIBITED
REGION A AS SETTING
OBJECT FOR SETTING
REGULAR TRAVELING LANE

TRAVELING-PROHIBITED
REGION CONTINUOUS
WHILE HAVING
INCLINATION

REGULAR TRAVELING
LANE BOUNDARY
HAVING HIGH LEVEL
OF RECOGNITION

ROAD MARKING

BOUNDARY OF
TEMPORARY
TRAVELING LANE

REGULAR TRAVELING
LANE BOUNDARY

VEHICLE

BOUNDARY OF
TEMPORARY
TRAVELING LANE

ROAD MARKING

*Fig.4*

TRAVELING-PROHIBITED
REGION B AS SETTING
OBJECT FOR SETTING
REGULAR TRAVELING LANE

DISCONTINUOUS
TRAVELING-PROHIBITED
REGION

REGULAR TRAVELING
LANE BOUNDARY
HAVING HIGH LEVEL
OF RECOGNITION

ROAD MARKING

BOUNDARY OF
TEMPORARY
TRAVELING LANE

VEHICLE

REGULAR TRAVELING
LANE BOUNDARY

BOUNDARY OF
TEMPORARY
TRAVELING LANE

ROAD MARKING

*Fig.5*

DISCONTINUOUS
TRAVELING-PROHIBITED
REGION

ROAD MARKING

LOW

WEIGHTING
OF LEVEL
OF RELIABILITY

HIGH

VEHICLE

Fig.6

DISCONTINUOUS
TRAVELING-PROHIBITED
REGION

TRAVELING-PROHIBITED
REGION C AS SETTING
OBJECT FOR SETTING
REGULAR TRAVELING LANE

ROAD MARKING

REGULAR TRAVELING
LANE BOUNDARY
HAVING HIGH LEVEL
OF RECOGNITION

BOUNDARY OF
TEMPORARY
TRAVELING LANE

VEHICLE

REGULAR TRAVELING
LANE BOUNDARY

BOUNDARY OF
TEMPORARY
TRAVELING LANE

ROAD MARKING

*Fig.7*

100

VEHICLE EXTERIOR CAMERA

RADAR DEVICE

LEVEL OF
RELIABILITY (%)

0

200

DETECTION DISTANCE (m)

## Fig.8A

100

VEHICLE EXTERIOR CAMERA

LEVEL OF
RELIABILITY (%)

RADAR DEVICE

0

100

REFLECTANCE (%)

## Fig.8B

START

S101

SET TEMPORARY
TRAVELING LANE

S102

TRAVELING-PROHIBITED
REGION EXISTS IN TEMPORARY
TRAVELING LANE?

No

Yes

S103

TRAVELING-PROHIBITED
REGION HAS CONTINUITY?

No

Yes

S104

SET REGULAR TRAVELING LANE
IN CONFORMITY WITH
TRAVELING-PROHIBITED REGION
HAVING CLOSEST LATERAL
POSITION IRRELEVANT TO
DISTANCE AHEAD

S105

SET REGULAR TRAVELING LANE
FROM POSITIONAL
RELATIONSHIP BETWEEN
VEHICLE AND
TRAVELING-PROHIBITED REGION
SUBJECTED TO WEIGHTING OF
LEVEL OF RELIABILITY

S106

SET TEMPORARY
TRAVELING LANE TO
REGULAR TRAVELING
LANE AS IT IS

RETURN

*Fig.9*

23

EP 2 654 026 A1

## INTERNATIONAL SEARCH REPORT

| International application No. |
|---|
| PCT/JP2010/072566 |

**A. CLASSIFICATION OF SUBJECT MATTER**
*G08G1/16*(2006.01)i

According to International Patent Classification (IPC) or to both national classification and IPC

**B. FIELDS SEARCHED**

Minimum documentation searched (classification system followed by classification symbols)
G08G1/16

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2004-351994 A (Denso Corp.),<br>16 December 2004 (16.12.2004),<br>paragraphs [0008] to [0010], [0062] to [0076];<br>fig. 4<br>(Family: none) | 1,2,4-6<br>3 |
| Y<br>A | JP 2001-291197 A (Honda Motor Co., Ltd.),<br>19 October 2001 (19.10.2001),<br>claims 8, 9<br>& DE 10117237 A | 1,2,4-6<br>3 |
| Y | JP 2006-113627 A (Honda Motor Co., Ltd.),<br>27 April 2006 (27.04.2006),<br>claims 2, 3; paragraphs [0016], [0017]<br>(Family: none) | 2 |

| ☒ | Further documents are listed in the continuation of Box C. | ☐ | See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>28 February, 2011 (28.02.11) | Date of mailing of the international search report<br>08 March, 2011 (08.03.11) |
|---|---|
| Name and mailing address of the ISA/<br>Japanese Patent Office | Authorized officer |
| Facsimile No. | Telephone No. |

Form PCT/ISA/210 (second sheet) (July 2009)

24

| | INTERNATIONAL SEARCH REPORT | International application No. |
|---|---|---|
| | | PCT/JP2010/072566 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-186301 A (Mazda Motor Corp.), 20 August 2009 (20.08.2009), entire text (Family: none) | 1-6 |
| A | JP 06-266828 A (Fuji Heavy Industries Ltd.), 22 September 1994 (22.09.1994), entire text (Family: none) | 1-6 |
| A | JP 2003-255047 A (Nissan Motor Co., Ltd.), 10 September 2003 (10.09.2003), entire text (Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10031799 A

- JP 2002225656 A